# EUROPÄISCHE PATENTSCHRIFT

(11) **EP 1 920 948 B1**
(45) Veröffentlichungstag und Bekanntmachung des Hinweises auf die Patenterteilung: **10.08.2011**
(21) Anmeldenummer: 07118152.3
(22) Anmeldetag: 09.10.2007
(51) Int. Cl.: B60B 1/02, B60B 1/00, B60B 19/00, B60B 19/10, B60B 7/00

(54) **Fahrzeugrad für ein zweispuriges Fahrzeug oder Abdeckung hierfür**
Vehicle wheel for a double-track vehicle or cover therefore
Roue de véhicule pour un véhicule à deux voies ou couverture correspondante

(30) Priorität: 13.11.2006 DE 102006053299
(43) Veröffentlichungstag der Anmeldung: 14.05.2008
(73) Patentinhaber: Bayerische Motoren Werke Aktiengesellschaft, 80809 München (DE)
(72) Erfinder: Modlinger, Florian, 86510 Ried (DE); Demuth, Rainer, 80993 München (DE); Klussmann, Sven, 82223 Eichenau (DE)

(56) Entgegenhaltungen:
- DE-A1- 4 231 082
- DE-U1- 8 912 607
- DE-U1- 20 313 023
- FR-A- 581 308

## Beschreibung

Die Erfindung betrifft ein Fahrzeugrad für ein zweispuriges Fahrzeug oder eine außenseitige Abdeckung hierfür, mit Durchtrittsöffnungen zwischen sich im wesentlichen in Radialrichtung erstreckenden Speichen insbesondere für einen Kühlluftstrom für eine auf der Innenseite des Rades vorgesehene Radbremse, wobei die Durchtrittsöffnungen in seitlicher Projektion eine sich in Rad-Drehrichtung betrachtet verändernde Breite in Radialrichtung aufweisen. Zum technischen Umfeld wird lediglich beispielshalber auf die DE 42 31 082 A1 verwiesen.

An zweispurigen Fahrzeugen gewinnen Maßnahmen zur Reduzierung des Luftwiderstandes insbesondere bei höheren Fahrgeschwindigkeiten zunehmend an Bedeutung, wobei der Begriff der "Luftwiderstands-Reduzierung" im weitesten Sinne zu verstehen ist. Vorrangig sind hier Maßnahmen gesucht, die insbesondere an nicht spurgebundenen Kraftfahrzeugen den Kraftstoffverbrauch reduzieren. Diesbezüglich sind auch die Fahrzeugräder bzw. deren Einfluss auf den Luftwiderstand zu betrachten, wobei eine vollflächige Seitenverkleidung des Radhauses oder zumindest des Rades selbstverständlich am günstigsten wäre, wobei jedoch andererseits ein Kühlluftstrom für eine an der Radinnenseite vorgesehene Radbremse zu gewährleisten ist. In diesem Sinne kann in der Regel auf Durchtrittsöffnungen in der Radscheibe oder einer hierauf angebrachten Abdeckung oder im Falle eines Speichenrades zwischen diesen Speichen nicht verzichtet werden. Grundsätzlich bekannt ist es dabei, diese Durchtrittsöffnungen unter Berücksichtigung strömungsdynamischer Aspekte derart zu gestalten, dass sich ein günstiger besagter Kühlluftstrom einstellen kann. In diesem Sinne können die Durchtrittsöffnungen in seitlicher Projektion eine sich in oder über der Rad-Drehrichtung betrachtet verändernde Breite in Radialrichtung aufweisen.

Hiermit soll nun eine weitere Verbesserung an einem Fahrzeugrad oder einer Abdeckung hierfür nach dem Oberbegriff des Anspruchs 1 aufgezeigt werden, mit Hilfe derer im weitesten Sinne (wie eingangs genannt) eine Herabsetzung des Luftwiderstandes erzielbar ist (= Aufgabe der vorliegenden Erfindung).

Die Lösung dieser Aufgabe ist dadurch gekennzeichnet, dass entgegen der Drehrichtung des Rades bei Vorwärtsfahrt des Fahrzeugs betrachtet die genannte Breite (der Durchtrittsöffnungen in Radialrichtung) solchermaßen abnimmt und damit die Angriffsfläche der sich aus der Luftanströmung des Rades bei Bewegung des Fahrzeugs in Fahrtrichtung an einer vertikal ausgerichteten und sich oberhalb des Rad-Mittelpunktes befindenden Speiche einstellenden Druckkraft solchermaßen reduziert ist, dass der Hebelarm dieser Druckkraft bezüglich des Mittelpunktes des Fahrzeugrads geringer ist als der Hebelarm der sich an der Rückseite dieser Speiche einstellenden Sogkraft.

Mit dieser vorgeschlagenen Maßnahme wird zwar nicht direkt der Luftwiderstand herabgesetzt, sondern das einer Raddrehung entgegen gerichtete aus Luftkräften und der Rad-Rotation resultierende Widerstandsmoment, wie im weiteren näher erläutert wird, jedoch führt diese Maßnahme zu einer messbaren Herabsetzung des Kraftstoffverbrauchs.

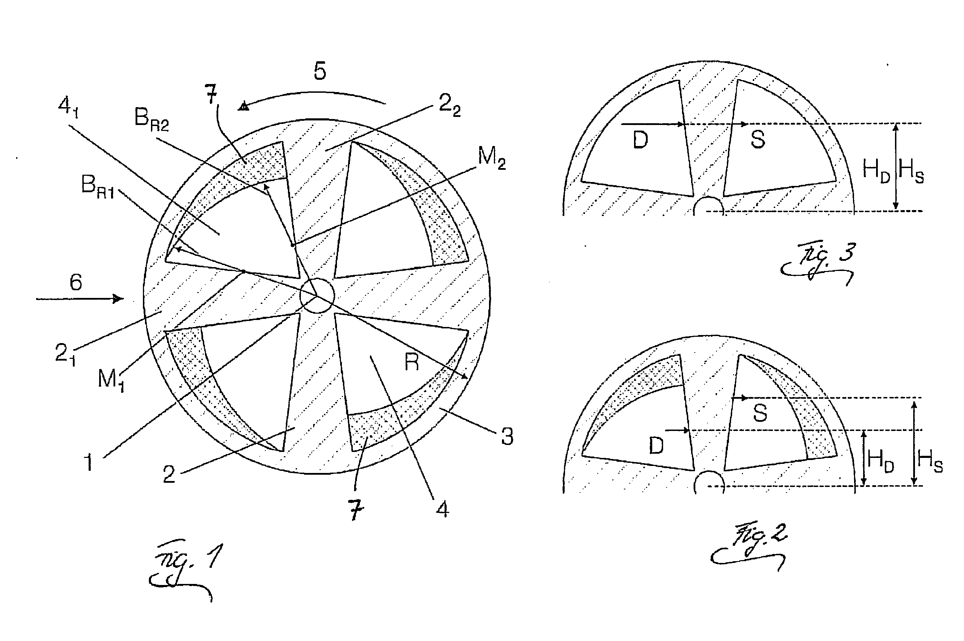

Die als Fig.1 beigefügte Prinzipskizze, durch welche selbstverständlich keine Einschränkung hinsichtlich einer bestimmten Ausführungsform erfolgen soll, zeigt zur Erläuterung des erfindungsgemäßen Prinzips ein Fahrzeugrad vereinfacht in Seitenansicht bei Betrachtung von außen, d.h. eine nicht sichtbare Radbremse liegt (in dem Fachmann bekannter Weise) hinter dem Rad bzw. unterhalb der Zeichenebene. Der Mittelpunkt dieses Rades ist mit der Bezugsziffer 1 gekennzeichnet und von diesem Mittelpunkt 1 aus erstrecken sich hier vier Speichen 2, die hier einen in Radialrichtung R zunehmenden Querschnitt besitzen, bis zur Radfelge 3, auf welcher dann ein nicht dargestellter Reifen aufgebracht werden oder sein kann. Zwischen zwei einander benachbarten Speichen 2 befindet sich (folglich) eine (hier relative große) Durchtrittsöffnung 4, durch welche bspw. ein Kühlluftstrom annähernd senkrecht zur Zeichenebene zwischen den Speichen 2 hindurch treten kann. Die Drehrichtung dieses Fahrzeugrades bei sich vorwärts fortbewegendem Fahrzeug ist durch den Pfeil 5 dargestellt.

Wie ersichtlich nimmt die in Radialrichtung R gemessene Breite B_{R} der Durchtrittsöffung(en) 4 entgegen der Drehrichtung 5 betrachtet ab, d.h. die Breite B_{R1} der Durchtrittsöffnung 4₁ zwischen den Speichen 2₁ und 2₂ nahe der (oder einer) in Drehrichtung 5 betrachtet vorderen Speiche 2₁ ist größer als die in dieser seitlichen Projektion in Radialrichtung R gemessene Breite B_{R2} nahe der Drehrichtung 5 betrachtet hinteren Speiche 2₂. Hierfür ist an der dem Mittelpunkt 1 zugewandten Innenseite der Radfelge 3, die hier in Radialrichtung R betrachtet eine konstante Breite besitzt, in jeder Durchtrittsöffnung 4 ein flächiges sichelförmiges Zusatzelement 7 vorgesehen, dessen Fläche in der Radebene entgegen der Drehrichtung 5 betrachtet zunimmt, jedoch kann die heraus resultierende Gestaltung der Durchtrittsöffnungen 4 auch andersartig erzielt werden.

Mit dieser Maßnahme wird die Angriffsfläche an der Speiche 2₂ für eine hinderliche, da den Strömungswiderstand erhöhende Druckkraft D, die sich aus der Luft-Anströmung des Rades gemäß Pfeil 6 bei Bewegung des Fahrzeugs in Fahrtrichtung (= entgegen Pfeil 6) einstellt, reduziert, wie insbesondere aus einem Vergleich der Figuren 2 und 3 hervorgeht, wobei in Fig.2 die obere Hälfte des Rades aus Fig.1 dargestellt ist, während Fig.3 in entsprechender Darstellung den am weitesten verbreiteten Stand der Technik zeigt, nach welchem die in Radialrichtung R gemessene Breite der Durchtrittsöffnungen 4 über der Rad-Drehrichtung betrachtet unverändert ist. Der Vergleich dieser beiden Figuren 2, 3 zeigt ferner deutlich, dass der Hebelarm H_{D} dieser Druckkraft D bezüglich des Mittelpunkts 1 mit der erfindungsgemäßen Maßnahme erheblich reduziert wird, was folglich ein reduziertes Widerstandsmoment (gegen eine Rad-Drehung) zur Folge hat.

Im wesentlichen keine Veränderung erfährt mit dieser vorgeschlagenen Maßnahme die weniger hinderliche Sogkraft S auf der Rückseite der der Anströmung 6 abgewandten Rückseite der hinteren Speiche 2₂, nachdem dort die Durchtrittsöffnung 4 wiederum die Breite B_{R1} hat und der Hebelarm H_{S} der Sogkraft S somit unverändert bleibt. Selbstverständlich wäre es im Hinblick auf eine Minimierung des genannten Widerstandsmoments sinnvoll, auch den Hebelarm H_{S} der Sogkraft S zu reduzieren, jedoch hätte dies dann eine flächenmäßig kleinere Durchtrittsöffnung 4 zur Folge, wodurch bspw. kein ausreichender Kühlluftstrom durch das Rad hindurch zustande käme.

Mit der erfindungsgemäßen Ausprägung bewegen sich quasi entgegen der Drehrichtung 5 des Rades betrachtet die in Radialrichtung R betrachteten Mittelpunkte Mᵢ der entgegen der Drehrichtung 5 aufeinander folgenden sog. virtuellen Segmente der Durchtrittsöffnung 4, die sich virtuell bis in den Mittelpunkt 1 erstrecken, in Richtung des Radmittelpunktes 1, d.h. unter Bezugnahme auf lediglich zwei solcher "virtuellen Segmente" liegt der in Drehrichtung 5 betrachtet vordere Mittelpunkt M₁ in Radialrichtung R betrachtet weiter außen als der (bzw. ein) weiter hinten in der Durchtrittsöffnung 4 liegender Mittelpunkt M₂. Mit dieser Maßnahme ergibt sich - wie bereits in Verbindung mit Fig.2 erwähnt ist - ein verringerter Hebelarm H_{D} bezüglich des Radmittelpunktes 1 für die an der der Anströmung 6 zugewandten Vorderseite der Speiche 2₂ angreifende Druckkraft D, der insbesondere auch geringer ist als der auf den Radmittelpunkt 1 bezogene Hebelarm H_{S} der an der bereits genannten Rückseite dieser Speiche 2₂ angreifenden Sogkraft S. Insgesamt führen diese Maßnahmen zu einem verringerten aus der Anströmung 6 und der Rad-Rotation resultierenden Widerstandsmoment bezüglich des Radmittelpunktes 1. Dabei können zur weiteren Reduzierung des Luftwiderstandes die Speichen selbst einen Strömungsprofil-Querschnitt besitzen, so wie dies bspw. aus der DE 89 12 607 U bekannt ist, jedoch können eine Vielzahl von Details abweichend von obigen Erläuterungen gestaltet sein, ohne den Inhalt des Patentanspruchs zu verlassen.

## Patentansprüche

1. Fahrzeugrad für ein zweispuriges Fahrzeug oder außenseitige Abdeckung hierfür, mit Durchtrittsöffnungen (4) zwischen sich im wesentlichen in Radialrichtung (R) erstreckenden Speichen (2, 2₁, 2₂) insbesondere für einen Kühlluftstrom für eine auf der Innenseite des Rades vorgesehene Radbremse, wobei die Durchtrittsöffnungen (4) in seitlicher Projektion eine sich in Rad-Drehrichtung (5) betrachtet verändernde Breite (B_{R}) in Radialrichtung (R) aufweisen, **dadurch gekennzeichnet, dass** entgegen der Drehrichtung (5) des Rades bei Vorwärtsfahrt des Fahrzeugs betrachtet die genannte Breite (B_{R}) solchermaßen abnimmt und damit die Angriffsfläche der sich aus der Luftanströmung des Rades bei Bewegung des Fahrzeugs in Fahrtrichtung an einer vertikal ausgerichteten und sich oberhalb des Rad-Mittelpunktes (1) befindenden Speiche (2₂) einstellenden Druckkraft (D) solchermaßen reduziert ist, dass der Hebelarm (H_{D}) dieser Druckkraft (D) bezüglich des Mittelpunktes (1) des Fahrzeugrads geringer ist als der Hebelarm (H_{S}) der sich an der Rückseite dieser Speiche (2₂) einstellenden Sogkraft (S).

## Claims

1. A vehicle wheel for a double-track vehicle or outside cover for this, with through-openings (4) between spokes (2, 2₁, 2₂) extending substantially in the radial direction (R), especially for a cooling air flow for a wheel brake provided on the inside of the wheel, wherein the through-openings (4), in a side projection, have a varying width (B_{R}) in the radial direction (R), viewed in the rotary direction (5) of the wheel, **characterised in that** counter to the rotary direction (5) of the wheel, viewed during forward travel of the vehicle, said width (B_{R}) decreases in such a way and thus the engagement area of the compressive force (D) being adjusted from the oncoming air flow of the wheel on movement of the vehicle in the direction of travel at a vertically oriented spoke (2₂) located above the centre point (1) of the wheel is reduced in such a way that the lever arm (H_{D}) of this compressive force (D) is lower with regard to the centre point (1) of the vehicle wheel than the lever arm (H_{S}) of the suction force (S) being adjusted at the rear of this spoke (2₂).

## Revendications

1. Roue de véhicule à deux voies ou couverture correspondante côté extérieur, comportant des ouvertures passantes (4) entre des rayons (2, 2₁, 2₂) s'étendant pratiquement dans la direction radiale (R), notamment pour un flux d'air de refroidissement pour un frein de roue sur le côté intérieur de la roue,
les ouvertures passantes (4) ayant en projection latérale, une largeur (B_{R}) variable dans la direction radiale (R) lorsqu'on observe dans le sens de rotation de la roue (5),
roue **caractérisée en ce que**
considérée dans le sens opposé au sens de rotation (5) de la roue pour la marche avant du véhicule, la largeur (B_{R}) diminue d'une manière telle et ainsi la surface d'attaque de la force de la pression D résultant de l'air sur la roue lorsque le véhicule se déplace dans le sens de circulation, sur un rayon (2₂) vertical au-dessus du centre (1) de la roue, diminue, de sorte que le bras de levier (H_{D}) de cette poussée (D) par rapport au centre (1) de la roue du véhicule, soit inférieur au bras de levier (H_{S}) de la force d'aspiration (S) qui s'établit au dos de ce rayon (2₂).
